# EUROPEAN PATENT APPLICATION

(11) **EP 3 150 494 A1**
(43) Date of publication of application: **05.04.2017**
(21) Application number: 16164130.3
(22) Date of filing: 06.04.2016
(51) Int. Cl.: B64D 11/00, B64D 11/06

(54) **TOUCH TABLE BODY STRUCTURE**

(30) Priority: 30.09.2015 TW 104132287
(71) Applicant: Aircom Pacific Inc, San Jose, CA 95113 (US)
(72) Inventor: SHIH, Daniel, Dublin, CA 94568 (US)
(74) Representative: Arpe Fernandez, Manuel de

(57) **Abstract**

A touch table body structure is provided, which includes a first bearing module (10), a second bearing module (11) and a plurality of support modules (12). One surface of the first bearing module (10) is provided with a touch display assembly (100). One end of the second bearing module (11) is pivotally connected to one end of the first bearing module (10). One end of each of the plurality of support modules (12) is pivotally connected to two sides of a chair back (20) of a seat (2) and the other end of each of the plurality of support modules (12) is pivotally connected to two sides of the first bearing module (10), respectively. The touch display assembly (100) disposed on the first bearing module (10) is provided to connect with an external electronic device, such that the user can input word, numeric, symbol, and so on to the external electronic device by touching a keyboard displayed on the display assembly (100).

## Description

### CROSS-REFERENCE TO RELATED APPLICATION

This application claims priority from Taiwan Patent Application No. 104132287, filed on September 30, 2015, in the Taiwan Intellectual Property Office, the entire content of which are hereby incorporated by reference in their entirety for all purposes.

### BACKGROUND OF THE INVENTION

### 1. Field of the Invention

The present invention relates to a table structure, and particularly relates to a touch table body structure having angle adjustment and touch control functionality.

### 2. Description of the Related Art

On the means of transportation such as airplanes, the seat backs of their seats are all equipped with simple trays on which items such as food or books, magazines, and so on can be disposed in order for the passengers to enjoy their time on board especially for a long flight.

However, the conventional trays of the seats provide no additional features in addition to the merely function of carrying items.

Therefore, the inventor of the present invention contemplates and designs a touch table body structure, in order to improve the lack of conventional technology, for the industry.

### SUMMARY OF THE INVENTION

In regard to the problem as above, an object of the invention is to provide a touch table body structure, to resolve the problem of the conventional art.

According to an object of the invention, a touch table body structure is provided, which comprises a first bearing module, a second bearing module, and a plurality of support modules. A surface of the first bearing module is provided with a touch display assembly. An end of the second bearing module is pivotally connected to an end of the first bearing module; when the first bearing module is in a horizontal state and the second bearing module, due to being touched, move from a first position to a second position, a surface of the second bearing module and the surface of the first bearing module form an angle as desired. An end of each of the plurality of support modules is pivotally connected to two sides of a chair back of a seat, another end of each of the plurality of support modules is pivotally connected to two sides of the first bearing module respectively. When the first bearing module and the second bearing module form an angle as desired and bear an external electronic device, and when the touch display assembly receives an execution signal transmitted by the external electronic device, the touch display assembly generates and displays a keyboard message accordingly, and when the touch display assembly is touched and thus generates a touch signal, the touch display assembly transmits the touch signal to the external electronic device, so that external electronic device generates and displays an input message accordingly.

Preferably, the touch display unit may comprise a touch display unit, a transmission unit, and a processing unit. The touch display unit is embedded into the surface of the first bearing module; the touch display unit, when being touched, generates a touch signal accordingly. The transmission unit is electrically connected to an external electronic device, and receives an execution signal transmitted by the external electronic device. The processing unit is coupled to the transmission unit and the touch display unit. When the processing unit receives execution signal, the processing unit generates a keyboard message accordingly, and controls the touch display unit to display the keyboard message; and when the processing unit receives a touch signal, the processing unit transmits the touch signal to the external electronic device via the transmission unit, so that the external electronic device generates and displays an input message accordingly.

Preferably, the keyboard message may include a plurality of blocks, each of which has a text. When the touch display unit is touched, the touch display unit, according to the block corresponding to a position which is touched, generates the touch signal corresponding to the text of the block accordingly, and the processing unit transmits the touch signal to the external electronic device via the transmission unit, so that external electronic device generates and displays the input message corresponding to the text accordingly.retriever may further connect to a monitor. The monitor shooting a preset area to obtain a surveillance video, the surveillance video is sent to the communication satellite by the antenna, then sent to the network base station and stored in the backup server.

Preferably, the text may include a word, numeric, and symbol.

Preferably, the input message may include a word, numeric, and symbol.

Preferably, the transmission unit can be electrically connected to the external electronic device via a transmission manner of Bluetooth or Wi-Fi, so as to transmit a message to the external electronic device, or vice versa.

Preferably, the transmission unit can be a universal series bus interface; the transmission unit is electrically connected to the external electronic device via a cable unit, so as to transmit a message to the external electronic device, or vice versa.

Preferably, the surface of the first bearing module has a region which is adjacent to the end of the first bearing module and inwardly recessed to form a recessed portion, the recessed portion is adjacent to the touch display assembly, and the first bearing module is engaged with a side of the external electronic device by the recessed portion so as to bear the external electronic device firmly.

Preferably, the angle as desired can be in a range of 30 to 60 degrees.

Preferably, the angle as desired can be 45 degrees.

Preferably, the touch display assembly can serve as a touch screen keyboard.

As described above, the touch table body structure according to the invention can be provided with a touch display assembly disposed on the first bearing module, and can be connected to the external electronic device by using the touch display assembly, in order for the user to input an input message such as a word, numeric, or symbol, etc. to the external electronic device by touching the keyboard message displayed by the touch display assembly while the user is using the external electronic device.

For better understanding of the above and other aspects of the invention, a plurality of embodiments or examples will be taken with accompanying drawings to provide detailed description as follows.

### BRIEF DESCRIPTION OF THE DRAWINGS

FIG. 1 is a structural schematic diagram illustrating a first embodiment of a touch table body structure of the invention.
FIG. 2 is a system block diagram illustrating the first embodiment of the touch table body structure of the invention.
FIG. 3 is a system block diagram illustrating a second embodiment of the touch table body structure of the invention.
FIG. 4 is a schematic diagram illustrating a third embodiment of the touch table body structure of the invention.
FIG. 5 is a structural schematic diagram illustrating a fourth embodiment of the touch table body structure of the invention.
FIG. 6 is a system block diagram illustrating the fourth embodiment of the touch table body structure of the invention.
FIG. 7 is a structural schematic diagram illustrating a fifth embodiment of the touch table body structure of the invention.
FIG. 8 is a system block diagram illustrating the fifth embodiment of the touch table body structure of the invention.
FIG. 9 a structural schematic diagram illustrating a sixth embodiment of the touch table body structure of the invention.

### DETAILED DESCRIPTION OF THE PREFERRED EMBODIMENTS

To facilitate the examiner to understand the technical features of the present invention, the content and the advantages that can be achieved and its effect, the present invention will be described with the accompanying drawings, and in the form of embodiments as described in detail below. The use of drawings is only for illustration and assistance purposes, and the present invention is not necessarily true to scale and precise configuration after implementation. Thus, the scope of the invention should not be confined to the relationship of the proportion and the configuration of the accompanying drawings.

Embodiments of a touch table body structure according to the invention will be illustrated with reference to related drawings below. In order to facilitate understanding, the same elements in the following embodiments will be denoted by the same legends for the sake of illustration.

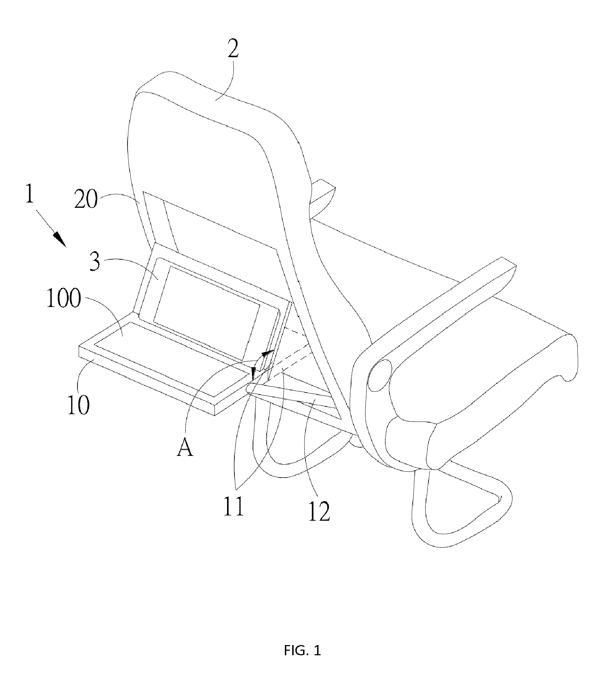

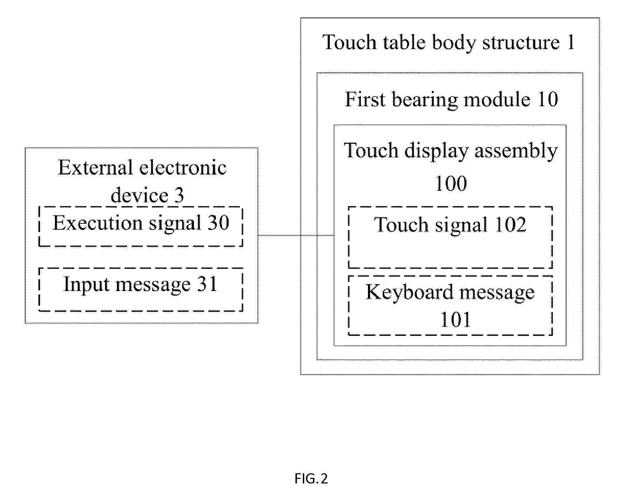

Please refer to FIG. 1 and FIG. 2, which are the structural schematic diagram and the system block diagram of the first embodiment of the invention, respectively. As illustrated in the Figures, a touch table body structure 1 comprises a first bearing module 10 , a second bearing module 11, and a plurality of support modules 12. A surface of the first bearing module 10 is provided with a touch display assembly 100. An end of the second bearing module 11 is pivotally connected to an end of the first bearing module 10. When the first bearing module 10 is in a horizontal state and the second bearing module 11, due to being touched, moves from a first position to a second position, a surface of the second bearing module 11 and the surface of the first bearing module 10 form an angle as desired, noted by A. An end of each of the plurality of support modules 12 is pivotally connected to two sides of a chair back 20 of a seat 2, another end of each of the plurality of support modules 12 is pivotally connected to two sides of the first bearing module 10 respectively. When the first bearing module 10 and the second bearing module 11 form the angle as desired and bear an external electronic device 3 and the touch display assembly 100 receives an execution signal 30 transmitted by the external electronic device 3, the touch display assembly 100 generates and displays a keyboard message 101 accordingly; and when the touch display assembly 100 is touched and thus generates a touch signal 102, the touch display assembly 100 transmits the touch signal 102 to the external electronic device 3, so that the external electronic device 3 generates and displays an input message 31 accordingly.

To be specific, the touch table body structure 1 of the invention, for example, can be provided with a touch display assembly 100, which can serve as a touch screen keyboard, disposed on the first bearing module 10. In addition, the touch table body structure 1 can be used to connect to the external electronic device 3 of a user by using the touch display assembly 100 in order for the user to input an input message 31 such as a word, numeric, or symbol to the external electronic device 3 by touching a keyboard message 101 displayed by the touch display assembly 100 while the user is using the external electronic device 3. The touch table body structure 1 can be applied to the seat 2, for example, in an aircraft. The touch table body structure 1 comprises the first bearing module 10, the second bearing module 11, and the plurality of support modules 12. A surface of the first bearing module 10 is provided with the touch display assembly 100. An end of the second bearing module 11 is rotatable and pivotally connected to an end of the first bearing module 10, wherein the first bearing module 10 and the second bearing module 11 can be a tray structure. The plurality of support modules 12 can be a rod body structure, an end of each of the support modules 12 can be pivotally connected to two sides of the chair back 20 of the seat 2, another end of each of the support modules 12 can be pivotally connected to two sides of the first bearing module 10. Thus, when the user takes the touch table body structure 1 from the chair back 20 and is going to have a meal, the first bearing module 10 and the second bearing module 11 can be taken in a horizontal state at the same time so that the user can put the food thereon. When the user would like to use the external electronic device 3 (such as a tablet computer), the user can adjust an angle at which the body of the second bearing module 11 is disposed, so that the second bearing module 11 moves from a first position (e.g., a horizontal state) to a second position (e.g., a sloping state). In this way, a surface of the second bearing module 11 and the surface of the first bearing module 10 form an angle as desired A, which may be in a range of 30 to 60 degrees; preferably, the angle as desired A may be 45 degrees.

After that, the user can dispose the external electronic device 3 on the first bearing module 10, making it lean against the second bearing module 11. Then, when the touch display assembly 100 can be dependent upon an execution signal 30 (e.g., a connection signal, or a starting signal transmitted after connection) transmitted by the external electronic device 3, the touch display assembly 100 generates a keyboard message 101 according to the execution signal 30, and displays the keyboard message 101 (e.g., a virtual keyboard). Finally, the user can touch the touch display assembly 100 according to the keyboard message 101, so that the touch display assembly 100 generates a touch signal 102 correspondingly, and transmits the touch signal 102 to the external electronic device 3, making the external electronic device 3 generate an input message 31 correspondingly, and displays the input message 31.

In this way as above, the touch display assembly 100 is utilized to display a virtual keyboard, for a user to input an input message 31 such as a word, numeric, or symbol into the external electronic device 3 by the touch display assembly 100.

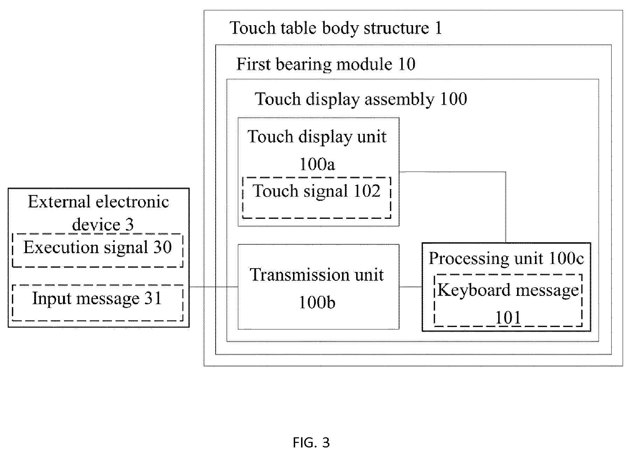

Please refer to FIG. 3, which is a system block diagram of the second embodiment of the touch table body structure of the invention. Please also refer to FIG. 1 and FIG. 2. As illustrated in the Figures, since the operations of the same elements of the touch table body structure of the present embodiment are similar to those of the touch table body structure of the first embodiment, they will not be repeated for the sake of brevity. However, it is noted that, in the present embodiment, the touch display unit 100 may include a touch display unit 100a, a transmission unit 100b, and a processing unit 100c. The touch display unit 100a is embedded into the surface of the first bearing module 10; the touch display unit 100a, when being touched, generates a touch signal 102 accordingly. The transmission unit 100b is electrically connected to the external electronic device 3, and receives the execution signal 30 transmitted by the external electronic device 3. The processing unit 100c is coupled to the transmission unit 100a and the touch display unit 100b. When the processing unit 100c receives the execution signal 30, the processing unit 100c generates the keyboard message 101 accordingly, and controls the touch display unit 100a to display the keyboard message 101; and when the processing unit 100c receives the touch signal 102, the processing unit 100c transmits the touch signal 102 to the external electronic device 3 via the transmission unit 100b, so that the external electronic device 3 generates and displays the input message 31 accordingly.

For example, the touch display unit 100 further includes a touch display unit 100a, a transmission unit 100b, and a processing unit 100c. The touch display unit 100a can be a touch display panel, and embedded into the surface of the first bearing module 10. The transmission unit 100b can be electrically connected to the external electronic device 3 by a transmission manner, such as Bluetooth or Wi-Fi; or the transmission unit 100b can be a universal serial bus interface, the transmission unit is electrically connected to the external electronic device 3 via a cable unit (such as a transmission line), so as to transmit a message to the external electronic device 3, or vice versa. The processing unit 100c can be a central processor or a circuit board. When the transmission unit 100b receives the execution signal 30 transmitted by the external electronic device 3, the processing unit 100c generates the keyboard message 101 accordingly, and controls the touch display unit 100a to display the keyboard message 101. After that, when the user wants to input an input message 31 such as a word, numeric, or symbol, and so on, the user can touch the touch display unit 100a, making the touch display unit 100a generate the touch signal 102. The touch signal 102 is then transmitted to the external electronic device 3 via the transmission unit 100b, and the external electronic device 3 generates the input message 31 correspondingly, and displays the input message 31 by a display device of the external electronic device 3.

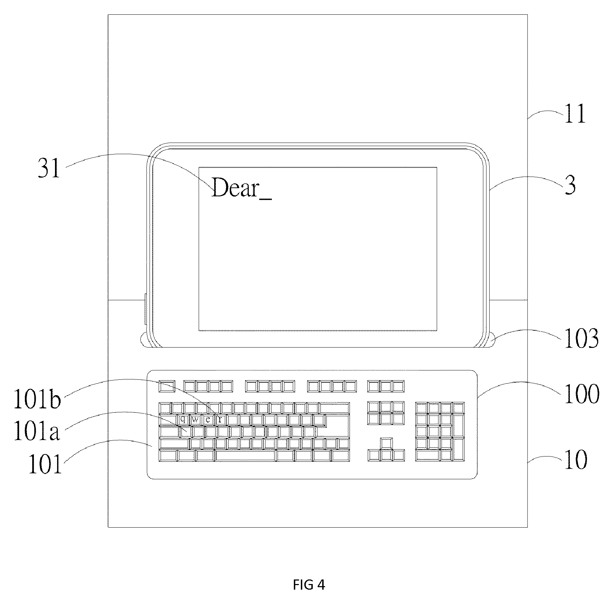

Please refer to FIG. 4, which is a schematic diagram of the third embodiment of the touch table body structure of the invention. Please refer to FIG. 1 to FIG. 3 also. As illustrated in the Figures, since the operations of the same elements of the touch table body structure of the present embodiment are similar to those of the touch table body structure of each of the above embodiments, they will not be repeated for the sake of brevity. However, it is noted that, in the present embodiment, the keyboard message 101 may include a plurality of blocks 101 a, each of the blocks 101 a has a text 101 b. When the touch display unit 100a is touched, the touch display unit 100a, according to the block 101 a corresponding to a position which is touched, so as to generate the touch signal 102 of the text 101b of the corresponding block 101 a accordingly, and the processing unit 100c transmits the touch signal 102 to the external electronic device 3 via the transmission unit 100b, so that external electronic device 3 generates and displays the corresponding text 101 b of the input message 31 accordingly.

To be specific, the keyboard message 101 may include a plurality of blocks 101 a, which are similar to virtual keys, each of the blocks 101 a has a text 101 b, the text 101 b can be a word, numeric, or symbol. In this way, after the user touches the touch display unit 100a, the touch display unit 100a, according to the block 101 a corresponding to a position which is touched, generates a touch signal 102 of the text 101b (such as an English character "r") of the corresponding block 101 a. Then, the processing unit 100c transmits the touch signal 102 to the external electronic device 3 via the transmission unit 100b, so that the external electronic device 3 generates the input message 31 of the corresponding text 101b according to the touch signal 102, and displays the input message 31 of the English character "r", wherein the input message 31 can be a word, numeric, or symbol.

Further, in an example, the surface of the first bearing module 10 has a region which is adjacent to the end of the first bearing module and inwardly recessed to form a recessed portion 103, the recessed portion 103 is adjacent to the touch display assembly 100, the first bearing module 10 is engaged with a side of the external electronic device 3 by the recessed portion 103 so as to bear the external electronic device 3 firmly. That is, the first bearing module 10 of the invention can be further provided with a recessed portion 103, in order for the user to engage the external electronic device 3 in the recessed portion 103, so that the external electronic device 3 is disposed firmly, and sliding or shaking of external electronic device 3 is avoided.

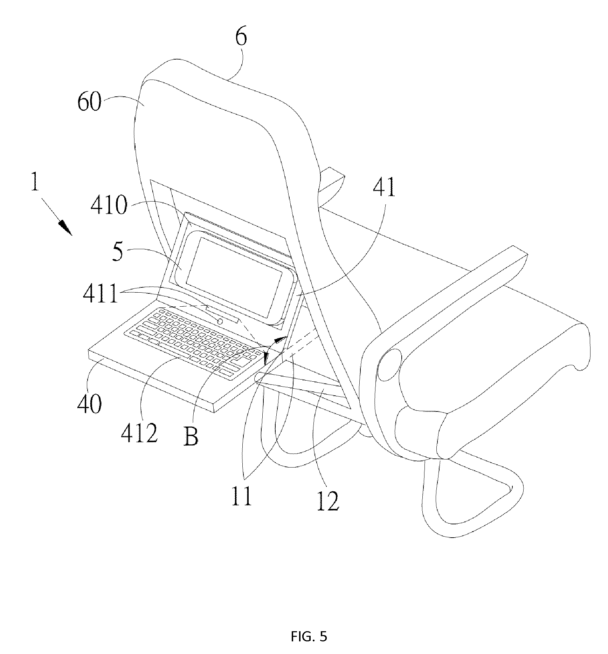

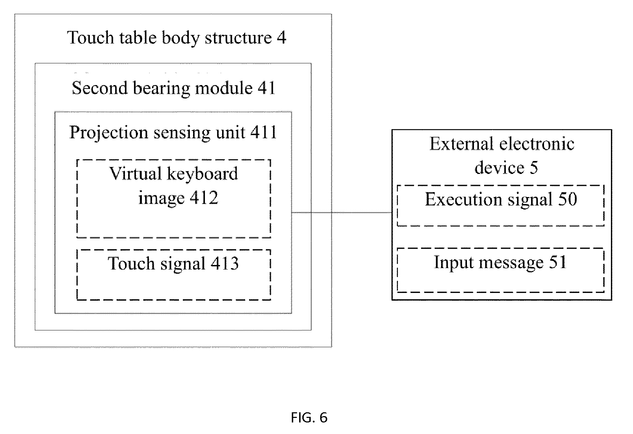

Referring to FIG. 5 and FIG. 6, the structural schematic diagram and the system block diagram of the fourth embodiment of the touch table body structure of the invention are illustrated, respectively. As illustrated in the Figures, a touch table body structure 4 comprises a first bearing module 40, a second bearing module 41, and a plurality of support modules 42. An end of the second bearing module 41 is pivotally connected to an end of the first bearing module 40. When the first bearing module 40 is in a horizontal state and the second bearing module 41, due to being touched, moves from a first position to a second position, a surface of the second bearing module 41 and the surface of the first bearing module 40 form an angle as desired, denoted by B. In addition, a surface of the second bearing module 41 has a block which is far wary from the first bearing module 40 and inwardly recessed to form an accommodation portion 410, so as to accommodate an external electronic device 5; and the surface of the second bearing module 41 has another block which is provided with a projection sensing unit 411. An end of each of the plurality of support modules 42 is pivotally connected to two sides of a chair back 60 of a seat 6, and another end of each of the plurality of support modules 42 is pivotally connected to two sides of the first bearing module 40. When the first bearing module 40 and the second bearing module 41 form the angle as desired B and the projection sensing unit 411 receives an execution signal 50 transmitted by the external electronic device 5, the projection sensing unit 411 projects a virtual keyboard image 412 onto a surface of the first bearing module 40 accordingly, and detects the virtual keyboard image 412. In addition, when at least one object 7 touches the virtual keyboard image 412, the projection sensing unit 411 generates a touch signal 413 accordingly, and transmits the touch signal 413 to the external electronic device 5, so that the external electronic device 5 generates and displays an input message 51 accordingly.

To be specific, the touch table body structure 4 of the invention, for example, can be provided with a projection sensing unit 411 a, which can be a projection keyboard, disposed on the second bearing module 41. In addition, the touch table body structure 4 can project a virtual keyboard image 412 onto the first bearing module 40, in order for the user to input an input message 31 such as a word, numeric, or symbol to the external electronic device 3 by touching the virtual keyboard image 412 while the user is using the external electronic device 3. The touch table body structure 4 can be applied to the seat 2, for example, in an aircraft. The touch table body structure 1 includes a first bearing module 40, a second bearing module 41, and a plurality of support modules 42. The first bearing module 10 and the second bearing module 11 can be tray structure, an end of the second bearing module 41 is pivotally connected to an end of the first bearing module 40. The plurality of support modules 42 can be a rod body structure, an end of each of the support modules 42 can be pivotally connected to two sides of a chair back 60 of a seat 6, another end of each of the support modules 42 can be pivotally connected to two sides of the first bearing module 40. Thus, when the user takes the touch table body structure 4 from the chair back 60 and is going to have a meal, the first bearing module 40 and the second bearing module 41 can be taken in a horizontal state at the same time so that the user can put the food thereon. When the user would like to use the external electronic device 5 (such as a tablet computer), the user can adjust an angle at which the body of the second bearing module 41 is disposed, so that the second bearing module 41 moves from a first position (e.g., a horizontal state) to a second position (a sloping state). In this way, a surface of the second bearing module 11 and the surface of the first bearing module 10 form an angle as desired B, which may be in a range of 30 to 60 degrees; preferably, the angle as desired B may be 45 degrees.

After that, the user can dispose the external electronic device 5 on the accommodation portion 410 of the second bearing module 41. Then, the user can transmits the execution signal 30 (e.g., a connection signal, or a starting signal transmitted after connection) to the projection sensing unit 411 via external electronic device 5, so as to make the projection sensing unit 411 project the virtual keyboard image 412 onto the first bearing module 40, and detect the virtual keyboard image 412. When the user would like to input a message such as a word, numeric, or symbol, and so on to the external electronic device 5, the user can touch the virtual keyboard image 412, so that the projection sensing unit 411 detects an object 7 (such as a finger of the user) touching the virtual keyboard image 412, and generates the touch signal 413 according to the touch behavior of the user, and transmits the touch signal 413 to the external electronic device 5, so that the external electronic device 5 generates and displays the input message 51 accordingly.

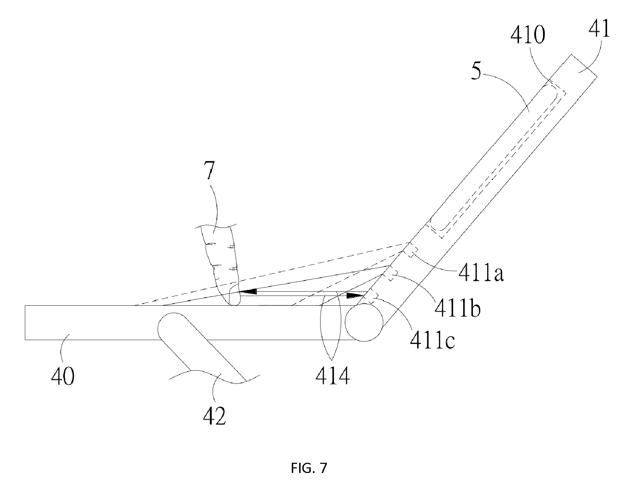

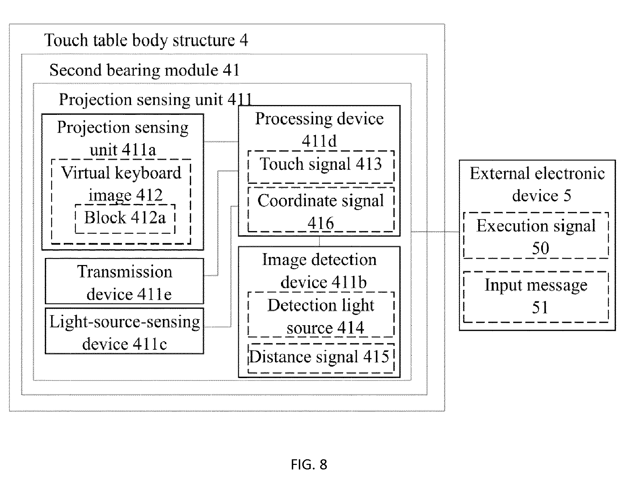

Referring to FIG. 7 and FIG. 8, the structural schematic diagram and the system block diagram of the fifth embodiment of the touch table body structure of the invention are illustrated, respectively. Please also refer to FIG. 5 and FIG. 6. As illustrated in the Figures, since the operations of the same elements of the touch table body structure of the present embodiment are similar to those of the touch table body structure of the fourth embodiment, they will not be repeated for the sake of brevity. However, it is noted that, in the present embodiment, the projection sensing unit 411 may include an image projection device 411 a, an image detection device 411 b, a light-source-sensing device 411 c, a processing device 411 d, and a transmission device 411 e. The image projection device 411 a is embedded into another block of the surface of the second bearing module 41, and projects the virtual keyboard image 412 onto the surface of the first bearing module 40. The image detection device 411 b is embedded into another block of the surface of the second bearing module 41, and adjacent to the image projection device 411 a, and detects the virtual keyboard image 412. The light-source-sensing device 411c is embedded into another block of the surface of the second bearing module 41, and adjacent to the image detection device 411 b, the light-source-sensing device 411c generates a detection light source 414, and projects a light onto another end of the first bearing module 40. The processing device 411 d is electrically connected to the image projection device 411 a, the light-source-sensing device 411c, and the image detection device 411b. When the processing device 411d receives the execution signal 50, the processing device 411d controls the image projection device 411 a to project the virtual keyboard image 412 accordingly, and controls the light-source-sensing device 411c to irradiate a light from the detection light source 414, and controls the image detection device 411b to detect the virtual keyboard image 412. The transmission device 411e is electrically connected to the processing device 411 d. When at least one object 7 touches the virtual keyboard image 412 and the light-source-sensing device 411c receives a light of detection light source 414 reflected by the at least one object 7, the light-source-sensing device 411c generates a distance signal 415 accordingly, and transmits the distance signal 415 to the processing device 411d, the processing device 411 d generates a coordinate signal 416 according to the distance signal 415, and controls, according to the coordinate signal 416, the image detection device 411 b to detect a corresponding block 412a of the virtual keyboard image 412, so as to generate a touch signal 413 accordingly, and the processing device 411 d controls the transmission device 411e to transmit the touch signal 413 to the external electronic device 5, so that the external electronic device 5 generates and displays the input message 51 accordingly.

For example, the projection sensing unit 411 further includes an image projection device 411 a, a light-source-sensing device 411 c, an image detection device 411 b, a processing device 411 d, and a transmission device 411 e. The image projection device 411 a can be a micro-projector, which can be embedded into another block of the surface of the second bearing module 41, and the image projection device 411 a projects the virtual keyboard image 412 onto the surface of the first bearing module 40. The image detection device 411 b can be embedded into another block of the surface of the second bearing module 41, and adjacent to the image projection device 411 a, and the image detection device 411 b is utilized for detecting the virtual keyboard image 412. The light-source-sensing device 411c can be a light-source sensing assembly for infrared transmission and receiving, which can be embedded into another block of the surface of the second bearing module 41, and adjacent to the image detection device 411 b, the light-source-sensing device 411c generates a detection light source 414 (e.g., infrared), and projects a light to another end of the first bearing module 40, wherein the light irradiation path for the detection light source 414 and the surface of the first bearing module 40 can be in a horizontal state, and have a predetermined distance therebetween, such as 1 to 2 mm, but the invention is not limited thereto. The processing device 411 d can be a microprocessor or a central processor, which can be electrically connected to the image projection device 411 a, the light-source-sensing device 411c, and image detection device 411b. When the processing device 411 d receives the execution signal 50 of the external electronic device 5, the processing device 411 d can control the image projection device 411 a to project the virtual keyboard image 412, and controls the light-source-sensing device 411c to irradiate a light from the detection light source 414, and controls the image detection device 411b to detect the virtual keyboard image 412. The transmission device 411e is electrically connected to the processing device 411d, and the transmission device 411e can electrically connected to the external electronic device 5 via a transmission manner of Bluetooth or Wi-Fi, so as to transmit a message to external electronic device 5, or vice versa. Alternatively, the transmission device 411e can be a universal serial bus interface, and can be electrically connected to the external electronic device 5 via a cable unit (such as a transmission line), so as to transmit a message to external electronic device 5, or vice versa.

When the user touches the virtual keyboard image 412 by one's finger, the user's finger will block the light irradiation path for the detection light source 414 of the light-source-sensing device 411c, so that the light from the detection light source 414 is reflected by the object 7 (i.e., the user's finger) and back to the light-source-sensing device 411c. Then, the light-source-sensing device 411c generates the distance signal 415 (i.e., indicating the distance between the object 7 and the light-source-sensing device 411c) according to the reflected light of the detection light source 414, and transmits the distance signal 415 to the processing device 411 d. After that, the processing device 411d generates the coordinate signal 416 according to the distance signal 415, and controls, according to the coordinate signal 416, the image detection device 411 b to detect the corresponding block 412a of the virtual keyboard image 412, so as to generate the touch signal 413 according to the block 412a; in addition, the processing device 411d controls the transmission device 411e to transmit the touch signal 413 to the external electronic device 5, so that the external electronic device 5 generates and displays the input message 51 accordingly.

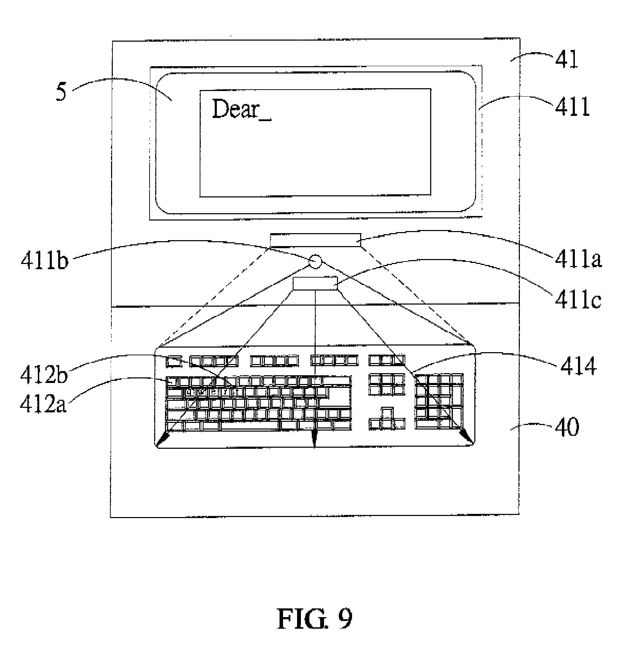

Referring to FIG. 9, the system schematic diagram of the sixth embodiment of the touch table body structure of the invention is illustrated. Please also refer to FIG. 5 to FIG. 9. As illustrated in the Figures, since the operations of the same elements of the touch table body structure of the present embodiment are similar to those of the touch table body structure of the first embodiment, they will not be repeated for the sake of brevity. However, it is noted that, in the present embodiment, the virtual keyboard image 412 can include a plurality of blocks 412a, each of the blocks 412a has a text 412b; the processing device 411 d controls, according to a coordinate signal 416, the image detection device 411 b to detect one corresponding block 412a of the virtual keyboard image 412, so as to generate the touch signal 413 of the text 412b of the corresponding block 412a accordingly, and the processing device 411d transmits the touch signal 413 to the external electronic device 5 via the transmission device 411 e, so that the external electronic device 5 generates and displays the input message 51 of the corresponding text 412b accordingly. The text 412b may include a word, numeric, and symbol; and the input message 51 may include a word, numeric, and symbol.

To be specific, the virtual keyboard image 412 can include a plurality of blocks 412a, which are similar to virtual keys, each of the blocks 412a has a text 412b, the text 412b may be a word, numeric, or symbol. In this way, after the user touches virtual keyboard image 412, the processing device 411 d generates the coordinate signal 416 according to the light-source-sensing device 411 c, and controls the image detection device 411 b to detect the text 412b of one corresponding block 412a of the virtual keyboard image 412 (such as an English character "r"), so as to generate the touch signal 413 of the text 412b of the corresponding block 412a accordingly. Then, the processing device 411 d transmits the touch signal 413 to the external electronic device 5 via the transmission device 411 e, so that the external electronic device 5 generates the input message 51 corresponding to the text 412b, according to the touch signal 413, and displays the input message 51 of the English character "r".

It will be apparent to those skilled in the art that various modifications and variations can be made to the present disclosure without departing from the spirit and scope of the disclosure. Thus it is intended that the present disclosure cover the modifications and variations of this disclosure provided they come within the scope of the appended claims and their equivalents.

## Claims

1. A touch table body structure, comprising:
a first bearing module (10), a surface of which is provided with a touch display assembly (100);
a second bearing module (11), an end of which is pivotally connected to an end of the first bearing module (10), wherein a surface of the second bearing module (11) and the surface of the first bearing module (10) form an angle as desired when the first bearing module (10) is in a horizontal state and the second bearing module (11), due to being touched, moves from a first position to a second position; and
a plurality of support modules (12), an end of each of which is pivotally connected with two sides of a chair back (20) of a seat (2), another end of each of the plurality of support modules (12) is pivotally connected with two sides of the first bearing module (10) respectively;
wherein when the first bearing module (10) and the second bearing module (11) form the angle as desired and bear an external electronic device (3), and the touch display assembly (100) receives an execution signal (30) transmitted by the external electronic device (3), the touch display assembly (100) generates and displays a keyboard message (101) accordingly; and when the touch display assembly (100) is touched and thus generates a touch signal (102), the touch display assembly (100) transmits the touch signal (102) to the external electronic device (3), so that the external electronic device (3) generates and displays an input message (31) accordingly.

2. The touch table body structure according to claim 1, wherein the touch display unit comprises:
a touch display unit, embedded into the surface of the first bearing module (10), for generating the touch signal (102) accordingly when the touch display unit is touched;
a transmission unit, electrically connected to the external electronic device (3), for receiving the execution signal (30) transmitted by the external electronic device (3); and
a processing unit, coupled to the transmission unit and the touch display unit, wherein when the processing unit receives the execution signal (30), the processing unit generates the keyboard message (101) accordingly, and controls the touch display unit to display the keyboard message (101); and when the processing unit receives the touch signal (102), the processing unit transmits the touch signal (102) to the external electronic device (3) via the transmission unit, so that the external electronic device (3) generates and displays the input message (31) accordingly.

3. The touch table body structure according to claim 2, wherein the keyboard message (101) comprises a plurality of blocks, each of the blocks has a text; when the touch display unit is touched, the touch display unit, according to the block corresponding to a position which is touched, generates the touch signal (102) corresponding to the text of the block accordingly, and the processing unit transmits the touch signal (102) to the external electronic device (3) via the transmission unit, so that the external electronic device (3) generates and displays accordingly.

4. The touch table body structure according to claim 3, wherein the text includes a word, numeric, and symbol.

5. The touch table body structure according to claim 3, wherein the input message (31) includes a word, numeric, and symbol.

6. The touch table body structure according to claim 2, wherein the transmission unit is electrically connected to the external electronic device (3) via a transmission manner of Bluetooth or Wi-Fi, so as to transmit a message to the external electronic device (3), or vice versa.

7. The touch table body structure according to claim 2, wherein the transmission unit is a universal series bus interface, the transmission unit is electrically connected to the external electronic device (3) via a cable unit, the external electronic device (3), or vice versa.

8. The touch table body structure according to claim 1, wherein the surface of the first bearing module (10) has a region which is adjacent to the end of the first bearing module (10) and inwardly recessed to form a recessed portion, the recessed portion is adjacent to the touch display assembly (100), the first bearing module (10) is engaged with a side of the external electronic device (3) by the recessed portion so as to bear the external electronic device (3) firmly.

9. The touch table body structure according to claim 1, wherein the angle as desired is in a range of 30 to 60 degrees.

10. The touch table body structure according to claim 9, wherein the angle as desired is 45 degrees.

11. The touch table body structure according to claim 1, wherein the touch display assembly (100) serves as a touch screen keyboard.
